# EUROPEAN PATENT SPECIFICATION

(11) **EP 2 461 084 B1**
(45) Date of publication and mention of the grant of the patent: **26.03.2014**
(21) Application number: 10804167.4
(22) Date of filing: 23.04.2010
(51) Int. Cl.: G02F 1/13357

(54) **BACKLIGHT DEVICE, DISPLAY DEVICE, AND TELEVISION RECEIVER**
RÜCKBELEUCHTUNGSVORRICHTUNG, ANZEIGEVORRICHTUNG UND FERNSEHEMPFÄNGER
DISPOSITIF DE RÉTROÉCLAIRAGE, DISPOSITIF D'AFFICHAGE ET TÉLÉVISEUR

(30) Priority: 31.07.2009 JP 2009179823
(43) Date of publication of application: 06.06.2012
(73) Proprietor: Sharp Kabushiki Kaisha, Osaka-shi, Osaka 545-8522 (JP)
(72) Inventor: MOURI, Hirokazu, Osaka-shi, Osaka 545-8522 (JP)
(74) Representative: Müller-Boré & Partner Patentanwälte PartG mbB
(86) International application number: PCT/JP2010/057220
(87) International publication number: WO 2011/013419

(56) References cited:
- JP-A- 2008 152 101
- JP-A- 2008 181 750
- JP-T- 2009 519 568
- US-A1- 2005 001 537
- US-A1- 2009 135 583
- US-A1- 2009 185 371

## Description

### Technical Field

The present invention relates to a backlight device, a display device and a television receiver. More particularly, the invention relates to a backlight device, a display device and a television receiver that incorporate a substrate on which point light sources are mounted and connectors which are provided on the substrate.

### Background Art

Conventionally, as a backlight device that applies light to a display panel, a backlight device is known that incorporates substrates on which point light sources are mounted and connectors which are provided on the substrates.

The conventional backlight device includes: a plurality of substrates on which a plurality of LEDs (light-emitting diodes (point light sources)) are mounted; connectors which are arranged on the substrates and which electrically connect the substrates; reflective members such as a reflective sheet arranged in a predetermined region on the substrates; and optical sheets such as a diffusion sheet arranged on the light emitting side of the LEDs. In the backlight device described above, a plurality of opening portions are formed in the reflective members, and the LEDs and the connectors are electrically connected to the substrates through these opening portions.

Here, since the light reflectance of the surface of the connector is generally lower than that of the surface of the reflective member, loss of light is produced on the surface of the connector. Specifically, light that is emitted from the LEDs, that is reflected off the optical sheets and that is reflected off the surface of the connectors is lower than light that is emitted from the LEDs, that is reflected off the optical sheets and that is reflected off the surface of the reflective members. Hence, when seen from the side of the display panel, the brightness of portions on the connectors is lower than that of portions other than the portions on the connector. Thus, the brightness of the display panel is disadvantageously made uneven.

Hence, a backlight device that overcomes this problem is proposed (for example, see patent document 1).

Patent document 1 discloses the backlight device including: a plurality of wiring substrates on which a plurality of LEDs (point light sources) are mounted; connectors which are arranged on the wiring substrates and through which signals for lighting up the LEDs are input and output; a reflective plate (reflective member) which is arranged on the wiring substrates; and a diffusion plate that is arranged on the light emitting side of the LEDs.

Patent document 1 proposes structures such as a structure where opening portions for electrically connecting the LEDs to the wiring substrates are formed in the reflective plate and where a reflective sheet is additionally provided to cover the surface of the connectors and a structure where notches are formed in the reflective plate to provide flap portions and where the flap portions are arranged to cover the surface of the connectors.

In the backlight device of patent document 1, the reflective sheet is additionally provided to cover the surface of the connectors and the flap portions of the reflective plate are arranged to cover the surface of the connectors, and thus it is possible to reduce the occurrence of loss of light on the surface of the connectors.

### Related Art Document

### Patent Document

Patent document 1: JP-A-2008-147147

US 2009/185371 A1 discloses a backlight module unit and a backlight module. The backlight module unit includes a first light source, a second light source, and an optical barrier. A light source interval is defined between the first light source and the second light source, while a barrier interval is defined between the optical barrier and the second light source. Because the barrier interval is substantially shorter than a half of the light source interval, the backlight module unit mixes the light evenly, and prevents the dark bands from forming due to the disposition of the optical barrier.

US 2009/135583 A1, on which the preambles of independent claims 1 and 3 are based, discloses a display system with a distributed LED backlight including: providing a plurality of tile LED light sources, each tile LED light source having a tile and a plurality of similar LED light sources on each tile connected for emitting light therefrom; orienting the plurality of tile LED light sources for illuminating a display from the back of the display; and integrating the plurality of tile LED light sources into a thermally and mechanically structurally integrated distributed LED tile matrix backlight light source.

### Disclosure of the Invention

### Problems to be Solved by the Invention

However, when, as in the backlight device of patent document 1, the reflective sheet is additionally provided to cover the surface of the connectors, since it is necessary to adhere the reflective sheet to each of the connectors, the number of production steps is disadvantageously increased.

Moreover, when the flap portions of the reflective plate are arranged to cover the surface of the connectors, since it is necessary to bend the base portions of the flap portions, a stress is applied to the portions (base portions) where the flap portions are bent. Hence, when the backlight device is used for a long period of time, the portions where the flap portions are bent may be folded or curved due to a temperature environment or a humidity environment. In this case, since the surface of the connectors is exposed, loss of light is produced on the surface of the connectors, and thus the brightness of a display panel is disadvantageously made uneven.

The present invention is made to solve the forgoing problem; an object of the present invention is to provide a backlight device, a display device and a television receiver that can reduce the increase in the number of production steps and that can reduce the unevenness of the brightness of a display panel. ,

### Means for Solving the Problem

To achieve the above object, according to a first aspect of the present invention, there is provided a backlight device as defined in claim 1, the backlight device including: a plurality of point light sources; a plurality of substrates, each having one surface on which the point light sources are mounted; and a connector which is arranged on the one surface of the substrates and which electrically connects adjacent substrates, in which the point light sources include a first point light source that is closest to the connector and a second point light source that is closest to the first point light source and at a position away from the connector as compared with the first point light source, and a luminous flux emitted from the first point light source is higher than a luminous flux emitted from the second point light source.

In the backlight device of the first aspect, as described above, since the luminous flux around the connectors can be made higher than the luminous flux in the area other than the vicinity of the connectors, even if loss of light is produced on the surface of the connectors, the loss of light produced on the surface of the connectors can be compensated for by the luminous flux around the connectors. In this way, when seen from the side of the display panel, it is possible to reduce the decrease in the brightness of portions on the connectors as compared with the brightness of a portion other than the portions on the connectors, and thus it is possible to reduce unevenness of the brightness of the display panel.

In the backlight device of the first aspect, as described above, since it is unnecessary to additionally provide the reflective sheet covering the surface of the connectors so as to reduce unevenness of the brightness of the display panel, it is possible to reduce the increase in the number of production steps.

In the backlight device of the first aspect, as described above, it is unnecessary to provide flap portions in the reflective member so as to reduce unevenness of the brightness of the display panel, and to arrange the flap portions such that the flap portions cover the surface of the connectors. In this way, even when the backlight device is used for a long period of time, since it is possible to prevent the reflective member from being folded or curved, it is possible to reduce unevenness of the brightness of the display panel.

Preferably, in the backlight device where the point light sources include the first point light source and the second point light source, the luminous efficiency of the first point light source is higher than the luminous efficiency of the second point light source. In this configuration, since it is possible to easily make the luminous flux emitted from the first point light source higher than the luminous flux emitted from the second light source, it is possible to easily reduce unevenness of the brightness of the display panel.

According to a second aspect of the invention, there is provided a backlight device as defined in claim 3. In this backlight device, a distance between the first point light sources on the adjacent substrates is less than a distance between the first point light source and the second point light source on one of the substrates. In this configuration, since it is possible to easily make the density of the point light sources arranged in the vicinity of the connector higher than the density of the point light sources arranged in the area other than the vicinity of the connector, it is possible to easily reduce unevenness of the brightness of the display panel.

Preferably, in the backlight device of the first and second aspect, a reflective member is provided in a predetermined region on the one surface of the substrate. In this configuration, it is possible to easily enhance the efficiency of use of light.

In the backlight device of the first and second aspect, the point light sources may be arranged in a longitudinal direction of the substrate.

Preferably, in the backlight device where the substrate is formed in the shape of a rectangle when seen in plan view, the point light sources are arranged on one of the substrates in the longitudinal direction of the substrate with a same pitch. In this configuration, it is possible to further reduce unevenness of the brightness of the display panel.

In the backlight device where the substrate is formed in the shape of a rectangle when seen in plan view, the connector may be arranged at an end portion of the substrate in the longitudinal direction, and a plurality of the substrates may be arranged along the longitudinal direction. In this configuration, it is possible to easily and electrically connect a plurality of the substrates either in series or in parallel.

Preferably, in the backlight device of the first and second aspect, the point light source is a light-emitting diode. In this configuration, it is possible to increase the life of the point light source and reduce the power consumption of the point light source.

Preferably, in the backlight device of the first and second aspect, a plurality of diffusion lenses are provided to cover a plurality of the point light sources, respectively. In this configuration, since it is possible to diffuse the light emitted from the point light sources, it is possible to further reduce unevenness of the brightness of the display panel.

A display device according to the present invention includes: the backlight device configured as described above; and a display panel that is illuminated by the backlight device. In this configuration, it is possible to obtain the display device that can prevent the number of production steps from being increased and that can reduce unevenness of the brightness of the display panel.

Preferably, the display panel includes a liquid crystal display panel. In this configuration, it is possible to obtain the liquid crystal display device that can prevent the number of production steps from being increased and that can reduce unevenness of the brightness of the display panel.

A television receiver according to the present invention includes: the display device configured as described above; a cabinet that holds the display device; a tuner; and a speaker. In this configuration, it is possible to obtain the television receiver that can prevent the number of production steps from being increased and that can reduce unevenness of the brightness of the display panel.

### Advantages of the Invention

As described above, according to the present invention, it is possible to easily obtain the backlight device, the display device and the television receiver that can prevent the number of production steps from being increased and that can reduce unevenness of the brightness of the display panel.

### Brief Description of Drawings

[Fig. 1] An exploded perspective view showing the overall configuration of a liquid crystal television receiver incorporating a backlight device according to a first embodiment of the present invention;
[Fig. 2] An exploded perspective view showing the structure of a liquid crystal display device incorporating the backlight device shown in Fig. 1 and according to the first embodiment of the present invention;
[Fig. 3] A cross-sectional view showing a structure around substrates of the backlight device shown in Fig. 1 and according to the first embodiment of the present invention;
[Fig. 4] A cross-sectional view showing a structure in Example 1 corresponding to the first embodiment of the present invention;
[Fig. 5] A diagram showing the characteristic of the brightness of light, in A direction, passing through the liquid crystal display panel of the Example 1 corresponding to the first embodiment of the present invention;
[Fig. 6] A diagram showing the characteristic of the brightness of light, in the A direction, passing through the liquid crystal display panel of Comparative example 1;
[Fig. 7] Image data obtained by shooting the liquid crystal display panel of Example 2 corresponding to the first embodiment of the present invention;
[Fig. 8] Image data obtained by shooting the liquid crystal display panel of Comparative example 2;
[Fig. 9] A cross-sectional view showing a structure around substrates of a backlight device according to a second embodiment of the present invention;
[Fig. 10] A cross-sectional view showing a structure in Example 3 corresponding to the second embodiment of the present invention;
[Fig. 11] A diagram showing the characteristic of the brightness of light, in the A direction, passing through the liquid crystal display panel of the Example 3 corresponding to the second embodiment of the present invention; and
[Fig. 12] Image data obtained by shooting the liquid crystal display panel of Example 4 corresponding to the second embodiment of the present invention.

### Mode for Carrying Out the Invention

Embodiments of the present invention will be described below with reference to accompanying drawings.

### (First embodiment)

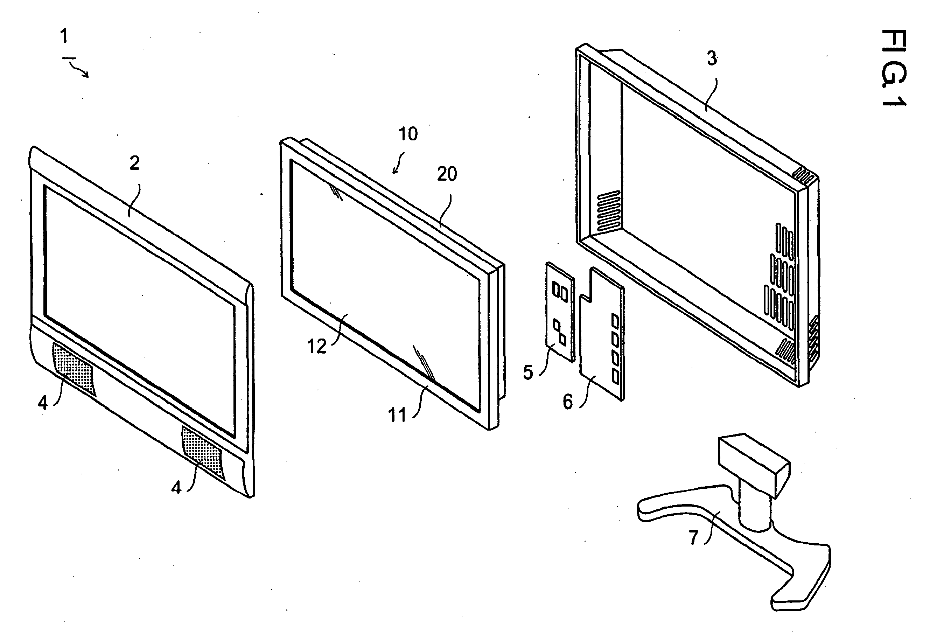

The structure of a liquid crystal television receiver 1 incorporating a backlight device 20 according to a first embodiment of the present invention will first be described with reference to Figs. 1 to 3. The liquid crystal television receiver 1 is an example of a "television receiver" of the present invention.

As shown in Fig. 1, the liquid crystal television receiver 1 incorporating the backlight device 20 according to the first embodiment of the present invention includes: a liquid crystal display device 10 including the backlight device 20; a front cabinet 2 and a back cabinet 3 that hold the liquid crystal display device 10; a speaker 4 attached to the front cabinet 2; a tuner 5; a power supply 6; and a support member 7. Since conventional common components can be applied to the front cabinet 2, the back cabinet 3, the speaker 4, the tuner 5, the power supply 6 and the support member 7, they will be described briefly. The liquid crystal display device 10 is an example of a "display device" of the present invention; the front cabinet 2 and the back cabinet 3 are an example of a "cabinet" of the present invention.

The front cabinet 2 and the back cabinet 3 hold the liquid crystal display device 10, the tuner 5 and the power supply 6. The tuner 5 has the function of producing the image signals and sound signals of a predetermined channel from received radio waves. The speaker 4 has the function of producing sound based on the sound signals produced by the tuner 5. The power supply 6 is configured to feed electric power to the liquid crystal display device 10, the speaker 4 and the tuner 5. The liquid crystal display device 10 is supported by the support member 7. The speaker 4, the tuner 5 and the power supply 6 may be incorporated in the liquid crystal display device 10.

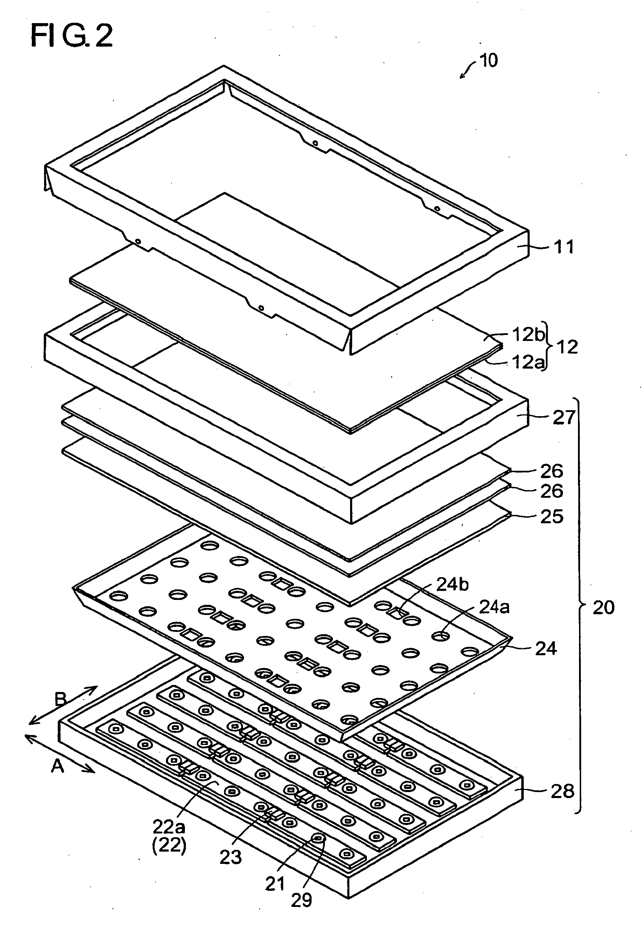

As shown in Fig. 2, the liquid crystal display device 10 is formed with: a frame-shaped bezel 11; a liquid crystal display panel 12 whose perimeter is covered by the bezel 11; and the backlight device 20 that is arranged on the side of the back surface of the liquid crystal display panel 12. The liquid crystal display panel 12 is an example of a "display panel" of the present invention.

The liquid crystal display panel 12 includes an AM substrate (active matrix substrate) 12a and an opposite substrate 12b that is arranged opposite the AM substrate 12a. Liquid crystal (not shown) is sealed in between the AM substrate 12a and the opposite substrate 12b. The liquid crystal display panel 12 is illuminated by the backlight device 20 to function as a display panel.

The backlight device 20 includes: a plurality of substrates 22 on which a plurality of LEDs 21 are mounted; connectors 23 that connect the adjacent substrates 22, for example, in series; a reflective sheet 24 that is arranged on the side of the front surfaces 22a of the substrates 22; a diffusion plate 25 and a plurality of optical sheets 26 that are arranged on the side of the front surface of the reflective sheet 24; and a front chassis 27 and a back chassis 28 that hold these components. The LED 21 is an example of a "point light source" and a "light-emitting diode" of the present invention; the front surface 22a is an example of "one surface" of the present invention. The reflective sheet 24 is an example of a "reflective member" of the present invention.

The substrate 22 is formed in the shape of a rectangle when seen in plan view. For example, three of the substrates 22 are arranged along the longitudinal direction of the substrate 22, and, for example, five of the substrates 22 are arranged in the lateral direction of the substrate 22. In the following description, the longitudinal direction of the substrate 22 is referred to as A direction, and the lateral direction of the substrate 22 is referred to as B direction.

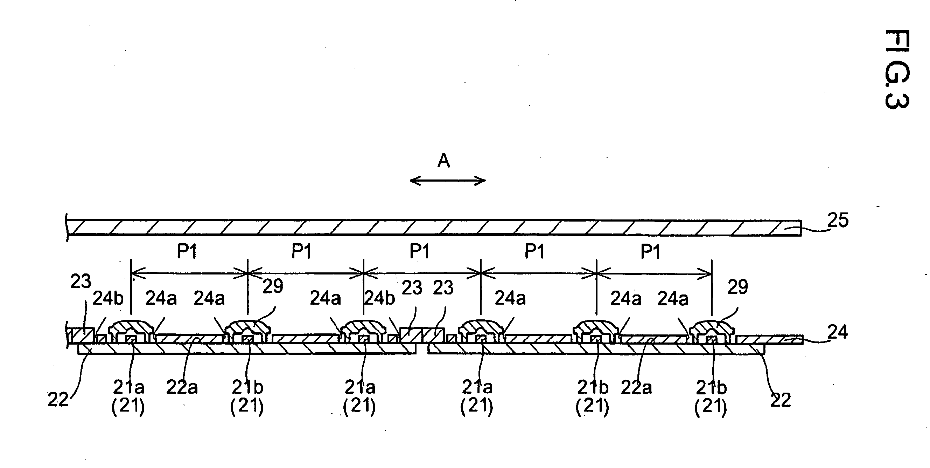

As shown in Fig. 3, on the front surfaces 22a of the substrates 22, a plurality of LEDs 21 and a plurality of connectors 23 are mounted. The connector 23 is attached to an end portion arranged opposite the substrate 22 adjacent in the A direction, among the ends of the substrate 22 in the A direction. A pair of connectors 23 adjacent to each other is connected to each other, and connects the adjacent substrates 22 physically and electrically. The light reflectance of the surface of the connector 23 is lower than that of the surface of the reflective sheet 24 (see Fig. 2).

The substrates 22 are configured such that current (power) is supplied to make the LEDs 21 emit light.

For example, three of the LEDs 21 are arranged on the front surface 22a of each of the substrates 22 along the A direction. The LEDs 21 are formed to emit light toward the front (the side of the diffusion plate 25). Each of the LEDs 21 is provided with a diffusion lens 29 having the function of diffusing light such that the diffusion lens 29 convers the LED 21. The diffusion lens 29 is formed of, for example, a transparent resin.

Here, in the first embodiment, for example, three of the LEDs 21 mounted on one of the substrates 22 are arranged with a predetermined pitch (P1). In other words, the three of the LEDs 21 are arranged on one of the substrates 22 with the same pitch in the A direction.

The LEDs 21 includes LEDs 21a that are arranged adjacent to the connectors 23 and LEDs 21b that are arranged at a position away from the connectors 23 as compared with the LEDs 21 a.

In the first embodiment, a distance between the LEDs 21 a on the adjacent substrates 22 is equal to a distance between the LED 21 a and the LED 21 b on one of the substrates 22. In other words, all the LEDs 21 mounted on three of the substrates 22 arranged in the A direction are arranged with the same pitch (P1). The LED 21 a is an example of a "first point light source" of the present invention; the LED 21b is an example of a "second point light source" of the present invention.

The LED 21 is formed with, for example, a blue light-emitting element and a fluorescent member that converts part of blue light emitted from the blue light-emitting element into yellow light; the blue light and the yellow light are mixed together to provide white light.

The LED 21 may be formed with, for example, a blue light-emitting element and a fluorescent member that converts part of blue light emitted from the blue light-emitting element into red light and green light; the blue light, the red light and the green light may be mixed together to provide white light.

The LED 21 may be formed with, for example, a blue light-emitting element, a fluorescent member that is arranged on the blue light-emitting element and that converts part of blue light into green light and a red light-emitting element; the blue light, the green light and the red light may be mixed together to provide white light.

The LED 21 may be formed with, for example, an ultraviolet light-emitting element and a fluorescent member that converts ultraviolet light into blue light, green light and red light.

In the first embodiment, a luminous flux LA that is emitted from the LED 21 a arranged adjacent to the connector 23 is higher than a luminous flux LB that is emitted from the LED 21b arranged at a position away from the connector 23 as compared with the LED 21 a. Specifically, a relationship "LA / LB = about 1.05 to about 1.10" is preferably satisfied between the luminous flux LA emitted from the LED 21a and the luminous flux LB emitted from the LED 21b.

For example, a current flowing through the LED 21a is made larger than a current flowing through the LED 21b, and thus it is possible to easily make the luminous flux LA emitted from the LED 21a higher than the luminous flux LB emitted from the LED 21 b.

As the LED 21 a arranged adjacent to the connector 23, the LED 21 that has luminous efficiency higher than that of the LED 21b is used, and thus it is possible to easily make the luminous flux LA emitted from the LED 21a higher than the luminous flux LB emitted from the LED 21b. In this case, since the current that is passed through the LED 21 a can be made equal to the current that is passed through the LED 21b, it is possible to prevent the circuit configuration from being complicated.

As the LED 21 a, the LED 21 that has luminous efficiency higher than that of the LED 21b may be used, and the current that is passed through the LED 21a may be made larger than the current that is passed through the LED 21b.

As shown in Figs. 2 and 3, the reflective sheet 24 is arranged in a predetermined region on the front surfaces 22a of the substrates 22. The reflective sheet 24 is formed of, for example, a white resin, and has the function of reflecting, toward the front (the side of the diffusion plate 25), light that is emitted from the LEDs 21 and that is reflected off the diffusion plate 25 and the like.

In the reflective sheet 24, a plurality of opening portions 24a through which the LEDs 21 and the diffusion lenses 29 are inserted and a plurality of opening portions 24b through which the connectors 23 are inserted are formed. The opening portion 24a is formed to have its inside diameter slightly larger than the outside diameter of the diffusion lens 29. The opening portion 24b is formed to have an opening slightly larger than the outside shape of a pair of connectors 23 adjacent to each other.

The diffusion plate 25 has the function of reflecting part of the light emitted from the LEDs 21 toward the side of the reflective sheet 24 and of transmitting the remainder of the light emitted from the LEDs 21 toward the side of the liquid crystal display panel 12 (the side of the optical sheets 26).

The optical sheets 26 (see Fig. 2) are formed with a prism sheet, a lens sheet and the like, and have the function of collecting the light passing through the diffusion plate 25 into a predetermined viewing angle.

The front chassis 27 and the back chassis 28 (see Fig. 2) are formed of resin. The front chassis 27 and the back chassis 28 may be formed of metal.

In the first embodiment, as described above, the luminous flux LA emitted from the LED 21 a is made higher than the luminous flux LB emitted from the LED 21b, and thus it is possible to make a luminous flux around the connectors 23 higher than a luminous flux in an area other than the vicinity of the connectors 23. Here, since the light reflectance of the surface of the connector 23 is lower than that of the surface of the reflective sheet 24, loss of light is produced on the surface of the connectors 23. However, since, in the first embodiment, the luminous flux around the connectors 23 can be made higher than the luminous flux in the area other than the vicinity of the connectors 23, even if loss of light is produced on the surface of the connectors 23, the loss of light produced on the surface of the connectors 23 can be compensated for by the luminous flux around the connectors 23. In this way, when seen from the side of the liquid crystal display panel 12, it is possible to reduce the decrease in the brightness of portions on the connectors 23 as compared with the brightness of a portion other than the portions on the connectors 23, and thus it is possible to reduce the unevenness of the brightness of the liquid crystal display panel 12.

Since, in the first embodiment, as described above, it is unnecessary to additionally provide the reflective sheet covering the surface of the connectors 23 so as to reduce the unevenness of the brightness of the liquid crystal display panel 12, it is possible to reduce the increase in the number of production steps.

In the first embodiment, as described above, it is unnecessary to provide flap portions in the reflective sheet 24 so as to reduce the unevenness of the brightness of the liquid crystal display panel 12, and to arrange the flap portions such that the flap portions cover the surface of the connectors 23. In this way, even when the backlight device 20 is used for a long period of time, since it is possible to prevent the reflective sheet 24 from being folded or curved, it is possible to reduce the unevenness of the brightness of the liquid crystal display panel 12.

In the first embodiment, as described above, the current flowing through the LED 21 a is made larger than the current flowing through the LED 21b, and thus it is possible to easily make the luminous flux LA emitted from the LED 21a higher than the luminous flux LB emitted from the LED 21b.

In the first embodiment, as described above, the luminous efficiency of the LED 21a is made higher than that of the LED 21 b, and thus it is possible to easily make the luminous flux LA emitted from the LED 21 a higher than the luminous flux LB emitted from the LED 21b.

In the first embodiment, as described above, the LEDs 21 are arranged on one of the substrates 22 with the same pitch in the A direction, and thus it is possible to further reduce the unevenness of the brightness of the liquid crystal display panel 12.

In the first embodiment, as described above, as the point light source, the light-emitting diode (LED 21) is used, and thus it is possible to increase the life of the point light source (LED 21) and to reduce the power consumption of the point light source (LED 21).

Since, in the first embodiment, as described above, the diffusion lenses 29 are provided to cover the LEDs 21 and thus it is possible to diffuse the light emitted from the LEDs 21, it is possible to further reduce the unevenness of the brightness of the liquid crystal display panel 12.

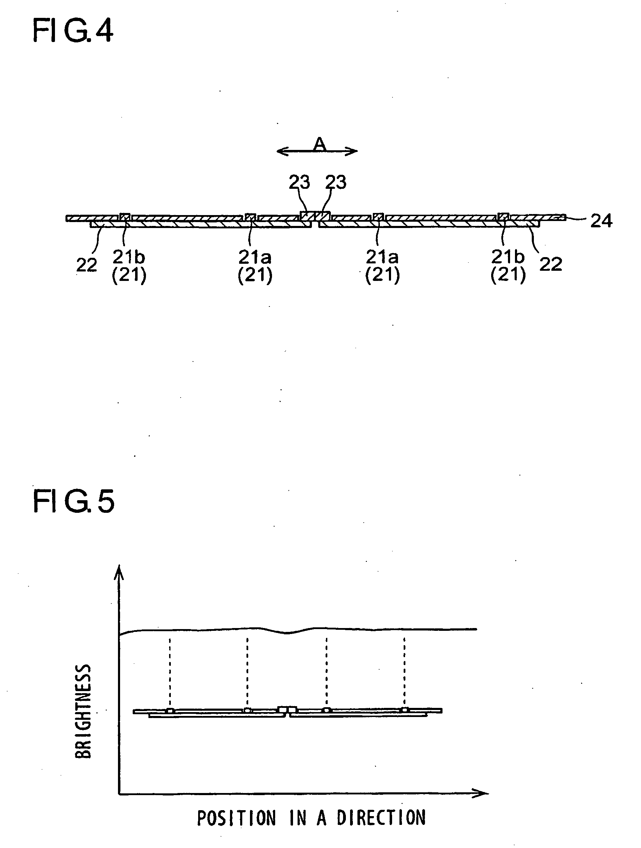

An experiment that has been performed to confirm the effects described above will now be described with reference to Figs. 4 to 8.

In this confirmation experiment, Examples 1 and 2 corresponding to the first embodiment and Comparative examples 1 and 2 were used. On the Example 1 corresponding to the first embodiment and the Comparative example 1, the characteristic of the brightness of the light, in the A direction, passing through the liquid crystal display panel 12 was determined by simulation. On the Example 2 corresponding to the first embodiment and the Comparative example 2, the characteristic of the brightness of the light, within a plane, passing through the liquid crystal display panel 12 (the characteristic of the brightness in the A direction and the B direction) was determined by simulation.

A simulation that was used to determine the characteristic of the brightness of the light, in the A direction, passing through the liquid crystal display panel 12 will first be described.

In the Example 1, as shown in Fig. 4, two substrates 22 were connected along the A direction. On each of the substrates 22, two LEDs 21 were mounted. All (four) LEDs 21 mounted on the two substrates 22 were arranged with the same pitch. A relationship "LA / LB = 1.05" was satisfied between the luminous flux LA emitted from the LED 21a that was arranged adjacent to the connector 23 and the luminous flux LB emitted from the LED 21b that was arranged at a position away from the connector 23 as compared with the LED 21 a. In the confirmation experiment, the diffusion lenses 29 were not provided on the LEDs 21.

In the Comparative example 1, the luminous flux LA emitted from the LED 21a that was arranged adjacent to the connector 23 and the luminous flux LB emitted from the LED 21b that was arranged at a position away from the connector 23 as compared with the LED 21a were equal to each other. The other structures in the Comparative example 1 were the same as in Example 1.

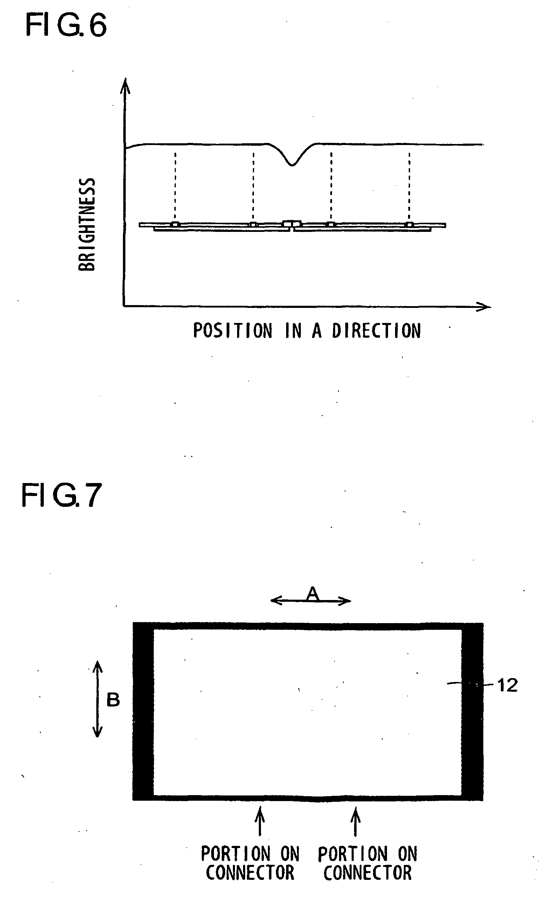

On the Example 1 and the Comparative example 1, the characteristic of the brightness of the light, in the A direction, passing through the diffusion plate 25 and the liquid crystal display panel 12 was determined by simulation. The results thereof are shown in Figs. 5 and 6, respectively.

With reference to Figs. 5 and 6, it has been shown that, in the Example 1, as compared with the Comparative example 1, it is possible to reduce the decrease in the brightness of an area above the connectors 23 and to reduce the unevenness of the brightness of the liquid crystal display panel 12. This is probably because, in the Example 1, the luminous flux LA emitted from the LED 21a was made higher than the luminous flux LB emitted from the LED 21b, and thus loss of light produced on the surface of the connectors 23 was able to be compensated for by the luminous flux emitted from the LEDs 21 a.

A simulation that was used to determine the characteristic of the brightness of the light, within the plane, passing through the liquid crystal display panel 12 will now be described.

In the Example 2, three substrates 22 were connected along the A direction. In the Example 2, as in the Example 1, a relationship "LA / LB = 1.05" was satisfied between the luminous flux LA emitted from the LED 21 a and the luminous flux LB emitted from the LED 21b. The other structures in the Example 2 were the same as in Example 1.

In the Comparative example 2, the luminous flux LA emitted from the LED 21a and the luminous flux LB emitted from the LED 21 b were equal to each other. The other structures in the Comparative example 2 were the same as in Example 2.

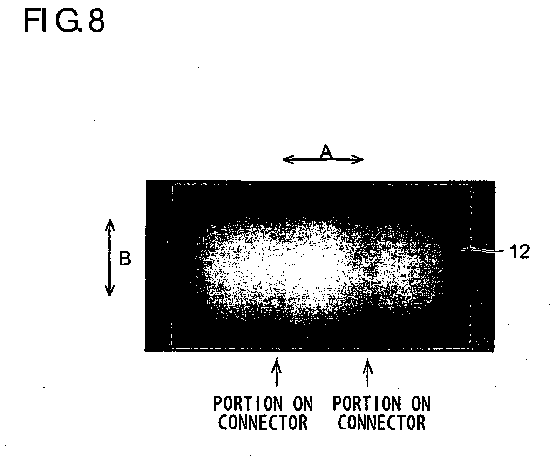

On the Example 2 and the Comparative example 2, the characteristic of the brightness of the light, within the plane, passing through the diffusion plate 25 and the liquid crystal display panel 12 was determined by simulation. The results thereof are shown in Figs. 7 and 8, respectively. Figs. 7 and 8 show image data obtained by shooting the liquid crystal display panel 12; a portion whose brightness is high is painted white as compared with a portion whose brightness is low.

With reference to Figs. 7 and 8, it has been shown that, in the Example 2, as compared with the Comparative example 2, it is possible to reduce the decrease in the brightness of the area above the connectors 23. Specifically, in the Comparative example 2, a dark line appeared on the portions on the connectors 23 of the liquid crystal display panel 12 whereas, in the Example 2, no dark line appeared on the portions on the connectors 23 of the liquid crystal display panel 12. This is probably because, in the Example 2, as in the Example 1, the luminous flux LA emitted from the LED 21 a was made higher than the luminous flux LB emitted from the LED 21b, and thus loss of light produced on the surface of the connectors 23 was able to be compensated for by the luminous flux emitted from the LEDs 21 a.

### (Second embodiment)

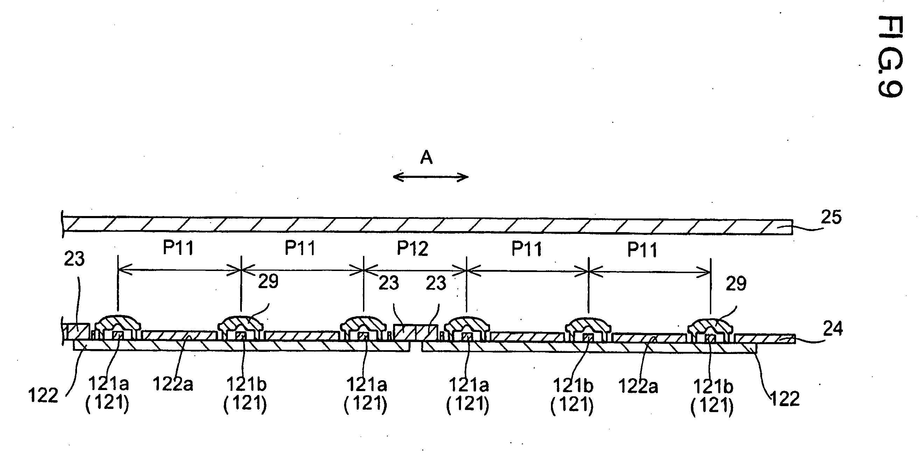

In a second embodiment, unlike the first embodiment, a case where the density of LEDs 121 arranged around the connectors 23 is increased will be described with reference to Fig. 9.

In a backlight device according to the second embodiment of the present invention, as shown in Fig. 9, on the front surfaces 122a of substrates 122, a plurality of LEDs 121 and a plurality of connectors 23 are mounted. The front surface 122a is an example of the "one surface" of the present invention. The LED 121 is an example of the "point light source" and the "light-emitting diode" of the present invention.

Here, in the second embodiment, for example, three of the LEDs 121 mounted on one of the substrates 122 are arranged with a predetermined pitch (P 11). In other words, three of the LEDs 121 are arranged on one of the substrates 122 with the same pitch in the A direction.

In the second embodiment, a distance between the LEDs 121a, among the LEDs 121, that are arranged adjacent to the connectors 23 is less than a distance between the LED 21 a and the LED 121 b that is arranged at a position away from the connector 23 as compared with the LED 121a. In other words, a pitch (P12) between the LEDs 121a on the adjacent substrates 122 is less than the pitch (P11) between the LED 121a and the LED 121b. Thus, the density of the LEDs 121 arranged around the connectors 23 is higher than that of the LEDs 121 arranged in an area other than the vicinity of the connectors 23. A relationship "P12 / P11 = about 0.93 to about 0.98" is preferably satisfied between the pitch (P12) between the LEDs 121a and the pitch (P11) between the LED 121 a and the LED 121b. The LED 121 a is an example of the "first point light source" of the present invention; the LED 121b is an example of the "second point light source" of the present invention.

In the second embodiment, the luminous flux emitted from the LED 121a is equal to the luminous flux emitted from the LED 121b.

The other structures in the second embodiment are the same as in the first embodiment.

In the second embodiment, as described above, the density of the LEDs 121 arranged around the connectors 23 is made higher than that of the LEDs 121 arranged in the area other than the vicinity of the connectors 23, and thus it is possible to easily make the luminous flux around the connectors 23 higher than the luminous flux in the area other than the vicinity of the connectors 23. In this way, even if loss of light is produced on the surface of the connectors 23, since, when seen from the side of the liquid crystal display panel 12, it is possible to easily prevent the brightness of the portions on the connectors 23 from becoming lower than the brightness of the portions other than the portions on the connectors 23, it is possible to reduce the unevenness of the brightness of the liquid crystal display panel 12.

In the second embodiment, as described above, the distance between the LEDs 121a on the adjacent substrates 122 is made less than the distance between the LED 121a and the LED 121b, and thus it is possible to easily make the density of the LEDs 121 arranged around the connectors 23 higher than that of the LEDs 121 arranged in the area other than the vicinity of the connectors 23. Consequently, it is possible to easily reduce the unevenness of the brightness of the liquid crystal display panel 12.

The other effects in the second embodiment are the same as in the first embodiment.

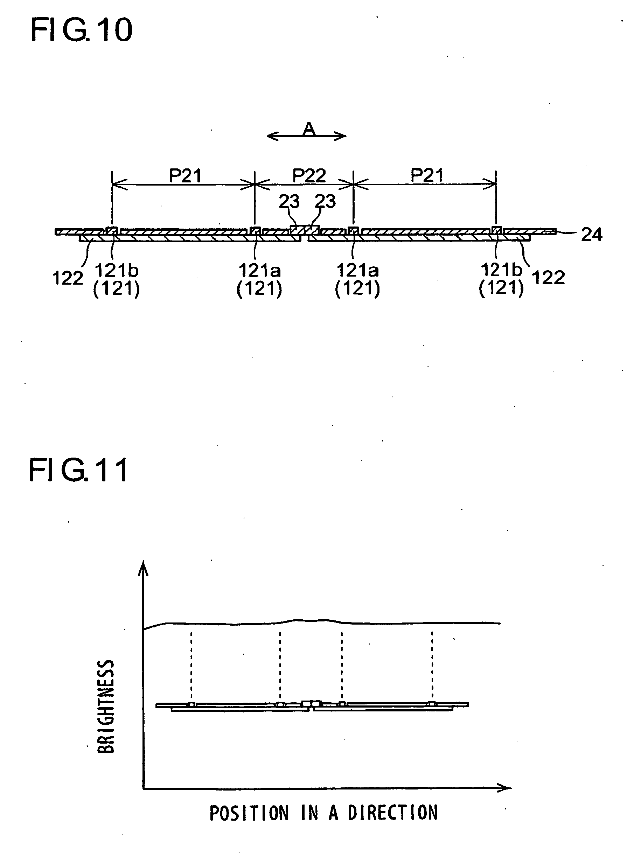

An experiment that has been performed to confirm the effects described above will now be described with reference to Figs. 10 to 12.

In this confirmation experiment, Examples 3 and 4 corresponding to the second embodiment were used. On the Example 3 corresponding to the second embodiment, the characteristic of the brightness of the light, in the A direction, passing through the liquid crystal display panel 12 was determined by simulation. On the Example 4 corresponding to the second embodiment, the characteristic of the brightness of the light, within a plane, passing through the liquid crystal display panel 12 (the characteristic of the brightness in the A direction and the B direction) was determined by simulation.

A simulation that was used to determine the characteristic of the brightness of the light, in the A direction, passing through the liquid crystal display panel 12 will first be described.

In the Example 3, as shown in Fig. 10, two substrates 122 were connected along the A direction. On each of the substrates 122, two LEDs 121 were mounted. A pitch (P22) between the LEDs 121a was less than a pitch (P21) between the LED 121a and the LED 121b. Specifically, a relationship "P22 / P21 = 0.95" was satisfied between the pitch (P22) between the LEDs 121 a and the pitch (P21) between the LED 121a and the LED 121b. The luminous flux emitted from the LED 121a was equal to the luminous flux emitted from the LED 121 b. In the confirmation experiment, the diffusion lenses 29 were not provided on the LEDs 121.

On the Example 3, the characteristic of the brightness of the light, in the A direction, passing through the diffusion plate 25 and the liquid crystal display panel 12 was determined by simulation. The result thereof is shown in Fig. 11.

With reference to Fig. 11, it has been shown that, in the Example 3, it is possible to reduce the decrease in the brightness of the area above the connectors 23 and to reduce the unevenness of the brightness of the liquid crystal display panel 12. This is probably because, in the Example 3, since the density of the LEDs 121 arranged around the connectors 23 was made higher than that of the LEDs 121 arranged in the area other than the vicinity of the connectors 23, and thus it was possible to make the luminous flux around the connectors 23 higher than the luminous flux in the area other than the vicinity of the connectors 23, loss of light produced on the surface of the connectors 23 was able to be compensated for.

A simulation that was used to determine the characteristic of the brightness of the light, within the plane, passing through the liquid crystal display panel 12 will now be described.

In the Example 4, three substrates 122 were connected along the A direction. In the Example 4, as in the Example 3, the relationship "P22 / P21 = 0.95" was satisfied between the pitch (P22) between the LEDs 121 a and the pitch (P21) between the LED 121a and the LED 121b. The luminous flux emitted from the LED 121a was equal to the luminous flux emitted from the LED 121b. The other structures in the Example 4 were the same as in Example 3.

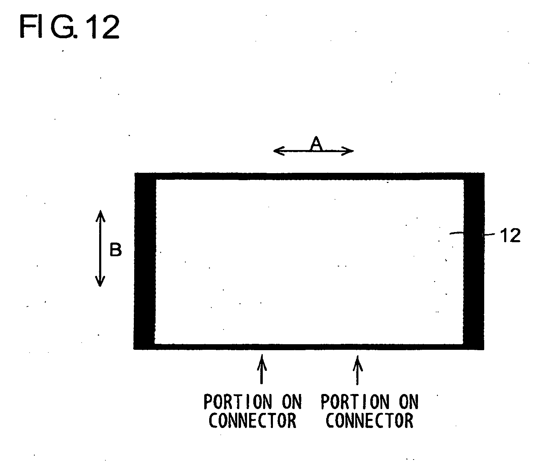

On the Example 4, the characteristic of the brightness of the light, within the plane, passing through the diffusion plate 25 and the liquid crystal display panel 12 was determined by simulation. The result thereof is shown in Fig. 12.

With reference to Fig. 12, it has been shown that, in the Example 4, as compared with the Comparative example 2, it is possible to reduce the decrease in the brightness of the area above the connectors 23. Specifically, in the Example 4, no dark line appeared on the portions on the connectors 23 of the liquid crystal display panel 12. This is probably because, in the Example 4, as in the Example 3, since the density of the LEDs 121 arranged around the connectors 23 was made higher than that of the LEDs 121 arranged in the area other than the vicinity of the connectors 23, and thus it was possible to make the luminous flux around the connectors 23 higher than the luminous flux in the area other than the vicinity of the connectors 23, loss of light produced on the surface of the connectors 23 was able to be compensated for.

It should be considered that the embodiments and the Examples disclosed herein are illustrative in all respects and not restrictive. The scope of the present invention is indicated not by the description of the embodiments and the Examples discussed above but by the scope of claims.

For example, although, in the embodiments described above, the example where the display panel, the display device and the television receiver are applied to the liquid crystal display panel, the liquid crystal display device and the liquid crystal television receiver, respectively, has been described, the present invention is not limited to this example. The display panel, the display device and the television receiver may be applied to a display panel, a display device and a television receiver other than the liquid crystal display panel, the liquid crystal display device and the liquid crystal television receiver.

Although, in the embodiments described above, the example where the LED is used as the point light source has been described, the present invention is not limited to this example. For example, a point light source other than the LED, such as a semiconductor laser element, may be used.

Although, in the embodiments and the Examples described above, the example where two or three of the LEDs are mounted on each of the substrates has been described, the present invention is not limited to this example. Four or more of the LEDs may be mounted on one of the substrates.

Although, in the embodiments described above, the example where the LED is configured to emit white light has been described, the present invention is not limited to this example. The LED may be configured to emit light other than white light.

Although, in the embodiments described above, the example where the LED is formed with a light-emitting element and a fluorescent member has been described, the present invention is not limited to this example. For example, instead of using a fluorescent member, the LED may be formed with a blue light-emitting element, a red light-emitting element and a green light-emitting element.

Although, in the embodiments described above, the example where the LEDs are mounted in a row has been described, the present invention is not limited to this example. The LEDs may be mounted in a plurality of rows on each of the substrates.

Although, in the embodiments described above, the example where the diffusion lens is provided to cover the LED has been described, the present invention is not limited to this example. The diffusion lens covering the LED does not need to be provided.

Although, in the embodiments described above, the example where the connector is provided at the end portion of the substrate has been described, the present invention is not limited to this example. The present invention can be applied to a case where the connector is provided at a position other than the end portion of the substrate.

Although, in the first embodiment, the example where the relationship "LA **/** LB = about 1.05 to about 1.10" is satisfied between the luminous flux LA emitted from the LED 21 a and the luminous flux LB emitted from the LED 21 b has been described, the present invention is not limited to this example. As long as the luminous flux LA is higher than the luminous flux LB, the relationship "LA / LB = about 1.05 to about 1.10" may not be satisfied between the luminous flux LA and the luminous flux LB.

Although, in the second embodiment, the example where the relationship "P 12 / P11 = about 0.93 to about 0.98" is satisfied between the pitch (P12) between the LEDs 121a and the pitch (P11) between the LED 121 a and the LED 121b has been described, the present invention is not limited to this example. As long as the pitch (P12) between the LEDs 121a is less than the pitch (P11) between the LED 121a and the LED 121b, the relationship "P12 / P11 = about 0.93 to about 0.98" may not be satisfied between the pitch (P12) and the pitch (P11).

### List of Reference Symbols

- 1: Liquid crystal television receiver (television receiver)
- 2: Front cabinet (cabinet)
- 3: Back cabinet (cabinet)
- 4: Speaker
- 5: Tuner
- 10: Liquid crystal display device (display device)
- 12: Liquid crystal display panel (display panel)
- 20: Backlight device
- 21 and 121: LED (point light source, light-emitting diode)
- 21a and 121a: LED (first point light source)
- 21b and 121b: LED (second point light source)
- 22 and 122: Substrate
- 22a and 122a: Front surface (one surface)
- 23: Connector
- 24: Reflective sheet (reflective member)
- 29: Diffusion lens

## Claims

1. A backlight device (20) comprising:
a plurality of point light sources (21, 121);
a plurality of substrates (22, 122), each having one surface on which the point light sources (21, 121) are mounted; and
a connector (23) which is arranged on the one surfaces of the substrates (22, 122) and which electrically connects adjacent substrates (22, 122),
wherein the point light sources (21, 121) on each substrate include a first point light source (21a, 121a) that is closest to the connector (23) and a second point light source (21b, 121b) that is closest to the first point light source and at a position away from the connector (23) as compared with the first point light source (21a, 121a), **characterised in that**
a luminous flux emitted from the first point light source (21a, 121 a) is higher than a luminous flux emitted from the second point light source (21b, 121b).

2. The backlight device (20) of claim 1,
wherein luminous efficiency of the first point light source (21a, 121a) is higher than luminous efficiency of the second point light source (21b, 121b).

3. A backlight device (20) comprising:
a plurality of point light sources (21, 121);
a plurality of substrates (22, 122), each having one surface on which the point light sources (21, 121) are mounted; and
a connector (23) which is arranged on the one surfaces of the substrates (22, 122) and which electrically connects adjacent substrates (22, 122),
wherein the point light sources (21, 121) on each substrate include a first point light source (21a, 121a) that is closest to the connector (23) and a second point light source (21b, 121b) that is closest to the first point light source and at a position away from the connector (23) as compared with the first point light source (21a, 121a), **characterised in that**
a distance between the first point light sources (21a, 121a) on the adjacent substrates (22, 122) is less than a distance between the first point light source (21a, 121a) and the second point light source (21b, 121b) on each of the adjacent substrates (22, 122).

4. The backlight device (20) of any one of claims 1 to 3,
wherein a reflective member (24) is provided in a predetermined region on the one surface of the substrates (22, 122).

5. The backlight device (20) of any one of claims 1 to 4,
wherein the point light sources (21, 121) are arranged in a longitudinal direction of the substrates (22, 122).

6. The backlight device (20) of claim 5,
wherein the point light sources (21, 121) are arranged on the substrates (22, 122) in the longitudinal direction of the substrates (22, 122) with a same pitch.

7. The backlight device (20) of claim 5 or 6,
wherein the connector (23) is arranged at an end portion of the substrates (22, 122) in the longitudinal direction, and
the plurality of the substrates (22, 122) are arranged along the longitudinal direction.

8. The backlight device (20) of any one of claims 1 to 7,
wherein the point light sources (21, 121) are light-emitting diodes.

9. The backlight device (20) of any one of claims 1 to 8,
wherein a plurality of diffusion lenses (29) are provided to cover the plurality of point light sources (21, 121), respectively.

10. A display device (10) comprising:
the backlight device (20) of any one of claims 1 to 9; and
a display panel (12) that is arranged to be illuminated by the backlight device (20).

11. A television receiver (1) comprising:
the display device (10) of claim 10;
a cabinet (2, 3) that holds the display device (10);
a tuner (5); and
a speaker (4).

## Patentansprüche

1. Hintergrundbeleuchtungsvorrichtung (20), umfassend:
eine Mehrzahl von Punktlichtquellen (21, 121);
eine Mehrzahl von Substraten (22, 122), die jeweils eine Oberfläche aufweisen, an der die Punktlichtquellen (21, 121) montiert sind; und
einen Verbinder (23), der an der einen Oberfläche bzw. der Oberflächen der Substrate (22, 122) angeordnet ist und der benachbarte Substrate (22, 122) elektrisch verbindet,
wobei die Punktlichtquellen (21, 121) an jedem Substrat eine erste Punktlichtquelle (21a, 121a), die am nächsten an dem Verbinder (23) ist, und eine zweite Punktlichtquelle (21 b, 121 b), die am nächsten an der ersten Punktlichtquelle und in einer Position entfernt von dem Verbinder (23) im Vergleich zu der ersten Punktlichtquelle (21 a, 121 a) ist, beinhalten,
**dadurch gekennzeichnet, dass**
ein Lichtstrom, der von der ersten Punktlichtquelle (21a, 121a) abgestrahlt wird,
höher als ein Lichtstrom, der von der zweiten Punktlichtquelle (21 b, 121 b) abgestrahlt wird, ist.

2. Hintergrundbeleuchtungsvorrichtung (20) nach Anspruch 1,
wobei die Lichteffizienz der ersten Punktlichtquelle (21a, 121a) höher als die Lichteffizienz der zweiten Punktlichtquelle (21 b, 121 b) ist.

3. Hintergrundbeleuchtungsvorrichtung (20), umfassend:
eine Mehrzahl von Punktlichtquellen (21, 121);
eine Mehrzahl von Substraten (22, 122), die jeweils eine Oberfläche aufweisen, an der die Punktlichtquellen (21, 121) montiert sind; und
einen Verbinder (23), der an der einen Oberfläche bzw. der Oberflächen der Substrate (22, 122) angeordnet ist und der benachbarte Substrate (22, 122) elektrisch verbindet,
wobei die Punktlichtquellen (21, 121) an jedem Substrat eine erste Punktlichtquelle (21a, 121a), die am nächsten an dem Verbinder (23) ist, und eine zweite Punktlichtquelle (21 b, 121 b), die am nächsten an der ersten Punktlichtquelle und in einer Position entfernt von dem Verbinder (23) im Vergleich zu der ersten Punktlichtquelle (21 a, 121 a) ist, beinhalten,
**dadurch gekennzeichnet, dass**
ein Abstand zwischen den ersten Punktlichtquellen (21 a, 121 a) an den benachbarten Substraten (22, 122) geringer als ein Abstand zwischen der ersten Punktlichtquelle (21a, 121a) und der zweiten Punktlichtquelle (21 b, 121b) an jedem der benachbarten Substrate (22, 122) ist.

4. Hintergrundbeleuchtungsvorrichtung (20) nach einem der Ansprüche 1 bis 3, wobei ein Reflexionselement (24) in einem vorbestimmten Bereich an der einen Oberfläche der Substrate (22, 122) vorgesehen ist.

5. Hintergrundbeleuchtungsvorrichtung (20) nach einem der Ansprüche 1 bis 4, wobei die Punktlichtquellen (21, 121) in Längsrichtung der Substrate (22, 122) angeordnet sind.

6. Hintergrundbeleuchtungsvorrichtung (20) nach Anspruch 5,
wobei die Punktlichtquellen (21, 121) an den Substraten (22, 122) in Längsrichtung der Substrate (22, 122) mit derselben Rasterweite angeordnet sind.

7. Hintergrundbeleuchtungsvorrichtung (20) nach Anspruch 5 oder 6,
wobei der Verbinder (23) an einer Endposition der Substrate (22, 122) in Längsrichtung angeordnet ist und
die Mehrzahl der Substrate (22, 122) entlang der Längsrichtung angeordnet ist.

8. Hintergrundbeleuchtungsvorrichtung (20) nach einem der Ansprüche 1 bis 7, wobei die Punktlichtquellen (21, 121) lichtemittierende Dioden sind.

9. Hintergrundbeleuchtungsvorrichtung (20) nach einem der Ansprüche 1 bis 8, wobei eine Mehrzahl von Diffusionslinsen (29) vorgesehen ist, um jeweils die Mehrzahl von Punktlichtquellen (21, 121) abzudecken.

10. Anzeigevorrichtung (10), umfassend:
die Hintergrundbeleuchtungsvorrichtung (20) nach einem der Ansprüche 1 bis 9; und
ein Anzeigefeld (12), das dafür angeordnet ist, von der Hintergrundbeleuchtungsvorrichtung (20) beleuchtet zu werden.

11. Fernsehempfänger (1), umfassend:
die Anzeigevorrichtung (10) nach Anspruch 10;
eine Halterung (2, 3), die die Anzeigevorrichtung (10) hält;
einen Tuner (5); und
einen Lautsprecher (4).

## Revendications

1. Dispositif de rétroéclairage (20) comprenant :
une pluralité de sources lumineuses ponctuelles (21, 121) ;
une pluralité de substrats (22, 122) ayant chacun une surface sur laquelle les sources lumineuses ponctuelles (21, 121) sont montées ; et
un connecteur (23) qui est agencé sur les surfaces des substrats (22, 122) et qui connecte électriquement des substrats adjacents (22, 122),
dans lequel les sources lumineuses ponctuelles (21, 121) sur chaque substrat incluent une première source lumineuse ponctuelle (21a, 121a) qui est la plus proche du connecteur (23) et une seconde source lumineuse ponctuelle (21b, 121b) qui est la plus proche de la première source lumineuse ponctuelle et à une position à l'écart du connecteur (23) par rapport à la première source lumineuse ponctuelle (21a, 121a), **caractérisé en ce que**
un flux lumineux émis depuis la première source lumineuse ponctuelle (21 a, 121a) est plus haut qu'un flux lumineux émis depuis la seconde source lumineuse ponctuelle (21b, 121b).

2. Dispositif de rétroéclairage (20) selon la revendication 1,
dans lequel l'efficacité lumineuse de la première source lumineuse ponctuelle (21a, 121a) est supérieure à l'efficacité lumineuse de la seconde source lumineuse ponctuelle (21b, 121b).

3. Dispositif de rétroéclairage (20) comprenant :
une pluralité de sources lumineuses ponctuelles (21, 121) ;
une pluralité de substrats (22, 122) ayant chacun une surface sur laquelle les sources lumineuses ponctuelles (21, 121) sont montées ; et
un connecteur (23) qui est agencé sur les surfaces des substrats (22, 122) et qui connecte électriquement des substrats adjacents (22, 122),
dans lequel les sources lumineuses ponctuelles (21, 121) sur chaque substrat incluent une première source lumineuse ponctuelle (21a, 121a) qui est la plus proche du connecteur (23) et une seconde source lumineuse ponctuelle (21b, 121b) qui est la plus proche de la première source lumineuse ponctuelle et à une position à l'écart du connecteur (23) par rapport à la première source lumineuse ponctuelle (21a, 121a), **caractérisé en ce que**
une distance entre les premières sources lumineuses ponctuelles (21a, 121a) sur les substrats adjacents (22, 122) est inférieure à une distance entre la première source lumineuse ponctuelle (21a, 121a) et la seconde source lumineuse ponctuelle (21b, 121b) sur chacun des substrats adjacents (22, 122).

4. Dispositif de rétroéclairage (20) selon l'une quelconque des revendications 1 à 3,
dans lequel un élément réfléchissant (24) est prévu dans une région prédéterminée sur la surface des substrats (22, 122).

5. Dispositif de rétroéclairage (20) selon l'une quelconque des revendications 1 à 4,
dans lequel les sources lumineuses ponctuelles (21, 121) sont agencées dans une direction longitudinale des substrats (22, 122).

6. Dispositif de rétroéclairage (20) selon la revendication 5,
dans lequel les sources lumineuses ponctuelles (21, 121) sont agencées sur les substrats (22, 122) dans la direction longitudinale des substrats (22, 122) avec un même pas.

7. Dispositif de rétroéclairage (20) selon la revendication 5 ou 6,
dans lequel le connecteur (23) est agencé à une portion d'extrémité des substrats (22, 122) dans la direction longitudinale, et
la pluralité de substrats (22, 122) est agencée le long de la direction longitudinale.

8. Dispositif de rétroéclairage (20) selon l'une quelconque des revendications 1 à 7,
dans lequel les sources lumineuses ponctuelles (21, 121) sont des diodes électroluminescentes.

9. Dispositif de rétroéclairage (20) selon l'une quelconque des revendications 1 à 8,
dans lequel une pluralité de lentilles de diffusion (29) est prévue pour recouvrir la pluralité de sources lumineuses ponctuelles (21, 121), respectivement.

10. Dispositif d'affichage (10) comprenant :
le dispositif de rétroéclairage (20) selon l'une quelconque des revendications 1 à 9 ; et
un panneau d'affichage (12) qui est agencé pour être illuminé par le dispositif de rétroéclairage (20).

11. Téléviseur (1) comprenant :
le dispositif d'affichage (10) selon la revendication 10 ;
un boîtier (2, 3) qui contient le dispositif d'affichage (10) ;
un tuner (5) ; et
un haut-parleur (4).
